# EUROPÄISCHE PATENTANMELDUNG

(11) **EP 0 541 982 A1**
(43) Veröffentlichungstag der Anmeldung: **19.05.1993**
(21) Anmeldenummer: 92117592.3
(22) Anmeldetag: 15.10.1992
(51) Int. Cl.: F27D 19/00, G05B 13/04, F27B 9/40

(54) **Verfahren zur Steuerung eines Tunnelofens**

(30) Priorität: 12.11.1991 DE 4137148
(71) Anmelder: TRANSTEC, D-61231 Bad Nauheim (DE)
(72) Erfinder: Vogt, Stefan, Dipl.-Ing., O-5300 Weimar (DE); Leisenberg, Wolfgang, Dr.-Ing., W-6350 Bad Nauheim 4 (DE)
(74) Vertreter: Engelhardt, Guido, Dipl.-Ing.

(57) **Zusammenfassung**

Bei einem Verfahren zur Steuerung eines Tunnelofens, der durch ein digitales Prozeßleitsystem steuerbar ist, ist vorgesehen, dem Prozeßleitsystem ein mathematisches Modell des Tunnelofens zuzuordnen, das durch einen Vergleich der Modellschätzwerte mit meßbaren Zustandswerten des Tunnelofens kontinuierlich an den momentanen Zustand des Tunnelofens angepaßt werden kann. Des weiteren werden, ausgehend von zeit-, ofenposition- und/oder produktabhängigen Zustands-Sollwerten des Tunnelofens über das adaptierbare Ofenmodell die zur Erreichung dieser Sollwerte erforderlichen Zustandswerte im Tunnelofen geschätzt und diese Zustandswerte werden durch Vorgabe von Führungswerten an Regler zur Einstellung der Zustandswerte und/oder durch direkte Vorgabe von Energie und/oder Massen- bzw. Volumensströmen realisiert.

Mittels diesem Verfahren ist es möglich, den Sinterprozeß keramischer Produkte unter kleinstmöglichem Energieeinsatz, geringsmöglichen Emissionen und größtmöglichster spezifischer Leistung und Reproduzierbarkeit durch Einhaltung eines produktspezifischen Temperaturverlaufes ablaufen zu lassen, so daß ein Tunnelofen in optimaler Weise zu betreiben ist.

## Beschreibung

Die Erfindung bezieht sich auf ein Verfahren zur Steuerung eines Tunnelofens, vorzugsweise zum Brennen keramischer Formlinge, der durch ein digitales Prozeßleitsystem steuerbar ist.

Die herkömmliche Prozeßleittechnik beruht auf der Vorgabe von Sollwerten für meßbare Regelgrößen. Mit Hilfe von Regelkreisen werden diese Regelgrößen auf vorgegebene Werte gehalten. Des weiteren ist es mit der derzeitig bekannten Leittechnik möglich, die Ofenraumtemperaturen aufgrund der Besatzdaten automatisch anzupassen (vgl. Leisenberg W. "Was ein Ofenrechner kann, was er können sollte", Interbrick, Vol. 4, No. 1, 1988, S 45 ff.).

Das konventionelle System der Leittechnik basiert somit darauf, daß bei reproduzierbaren Werten des Ofenraumzustandes auch reproduzierbare Zustandswerte am Produkt erzeugt werden. Dies ist allerdings nur dann der Fall, wenn der Tunnelofen statisch, d. h. mit gleichem Besatz, gleicher Schubzeit und gleicher Materialmischung betrieben wird. Wenn der Besatz häufig wechselt, wie das heute mit zunehmender Tendenz der Fall ist, kann man nicht mehr von einem statischen Betrieb ausgehen. Wenn dazu noch unterschiedliche Rohwichten der Produkte mit entsprechend variierenden Mengen von exothermen Porosierungsstoffen gebrannt werden, wird insbesondere die Aufheizzone bei konventioneller Leittechnik praktisch unkontrollierbar.

Die derzeitige Leittechnik stößt demnach mit ihrem Konzept an eine mit ihren Mitteln nicht mehr überwindbare Grenze, da die eigentlich entscheidenden Zustandswerte, nämlich die im Besatz, nicht erfaßt werden und sich, abgesehen von Oberflächen-Temperaturen und -Konzentrationen, überhaupt einer Messung entziehen. Aber vor allem die Besatztemperaturen, insbesondere in kritischen Bereichen wie auf der Wagensohle oder in der Besatzmitte, sind maßgebend für die Qualität des Produktionsprozesses.

Die des weiteren bekannte Modellbildung in der thermischen Verfahrenstechnik befaßt sich mit der mathematischen Beschreibung von Erwärmungsvorgängen. Zwar gelten auch im Tunnelofen die allgemeinen thermodynamischen Gesetze, doch sind viele Parameter der Wärmeübertragung aggregatabhängig und ändern sich zudem mit der Zeit und mit dem Betriebszustand. Voraussetzung für eine Anwendung von Modellen zur Steuerung von Tunnelöfen ist daher eine adaptierbare Grundstruktur des mathematischen Modells und eine automatische Adaption des Modells an den jeweiligen Betriebszustand des Tunnelofens.

Gemäß Vogt, S. Nover, K. "Zur Anwendung von Computermodellen für die Auslegung und Optimierung von grobkeramischen Tunnelöfen" in Ziegelindustrie International 10/91, Seite 549-556, stehen genügend genaue Modelle des Wärmetransports in Tunnelöfen zur Verfügung. Die Anwendung dieser Modelle an Tunnelöfen beschränkt sich aber auf eine Off line - Simulation von parametrierten Modellen spezieller Öfen, um beispielsweise den Einfluß von unterschiedlichen Brenneranordnungen oder Warmluftabzügen auf den Besatz zu ermitteln. Die Berechnung erfolgt daher off line und in Richtung Ofenraum zum Besatz.

Aufgabe der Erfindung ist es daher, ein Verfahren zur Steuerung eines Tunnelofens, der durch ein digitales Prozeßleitsystem steuarbar ist, zu schaffen, mittels dem es möglich ist, den Sinterprozess keramischer Produkte unter kleinstmöglichem Energieeinsatz, geringsmöglichen Emissionen und größtmöglicher spezifischer Leistung und Reproduzierbarkeit durch Einhaltung eines produktspezifischen Temperaturverlaufs ablaufen zu lassen. Ein Tunnelofen soll demnach in optimaler Weise zu betreiben sein.

Gemäß der Erfindung wird dies dadurch erreicht, daß dem Prozeßleitsystem ein mathematisches Modell des Tunnelofens zugeordnet ist, das durch einen Vergleich der Modell-Schätzwerte mit meßbaren Zustandswerten des Tunnelofens kontinuierlich an den momentanen Zustand des Tunnelofens angepaßt werden kann, und daß ausgehend von zeit-, ofenpositions- und/oder produktabhängigen Zustandssollwerten des Tunnelofenbesatzes über das adaptierte Ofenmodell die zur Erreichung dieser Sollwerte erforderlichen Zustandswerte im Tunnelofen geschätzt und diese Zustandswerte durch Vorgabe von Führungswerten an Regler zur Einstellung der Zustandswerte und/oder durch direkte Vorgabe von Energie- und/oder Massen- bzw. Volumensströmen realisiert werden.

Zweckmäßig ist es hierbei, die Einstellung der Luft- und/oder Rauchgas-Volumensströme unter Berücksichtigung der exothermen Reaktionen des Tunnelofenbesatzes durch Ermittlung aus dem Tunnelofenmodell in der Weise vorzunehmen, daß derjenige minimale Volumenstrom ermittelt wird, bei dem ein für jedes Temperaturintervall vorgebenener Temperaturgradient im Besatz an keiner Stelle der Aufheizung oder Kühlung überschritten wird.

Des weiteren ist es angebrcht, in einem oder mehreren iterativen Verfahrensschritten zu ermitteln, welcher Zustandswert bei den eingestellten Luft- und/oder Rauchgas-Volumensströmen zu einem zukünftigen Zeitpunkt eintritt, und in Abhängigkeit von dem Ergebnis die momentanen Luft- und/oder Rauchgas-Volumensströme derart zu korrigieren, daß zu dem zukünftigen Zeitpunkt ein kritischer Zustandswert und/oder ein unrealisierbarer Volumensstrom vermieden wird.

Zur Einstellung der Zustandswerte im Tunnelofen können neben produktspezifischen zulässigen Gradienten oder einer minimalen Abgasmenge weitere Randbedingungen, wie zeitweise vermehrte oder verminderte Warmluftabgabe zur energetischen Optimierung des Wärmeverbundes mit dem Trockner und/oder emisionsoptimale Gradienten und Haltezeiten, z. B. zur zeitoptimalen Durchfahrung des Fluoraustreibungstemperaturintervalls, und/oder temperaturoptimierte Haltezeiten zur Oxydation von organischen oder anorganischen Rohstoffkomponenten in das Ofenmodell integriert werden.

Unter Zugrundelegung eines vorgegebenen Zeittemperatur-Integrals als Kenngröße des Sinterprozesses des keramischen Materials der Formlinge können ferner die Haltetemperaturen bei vorgegebener Schubzeit oder die nottemperatur bestimmt und die sich daraus ergebenden Ofenraum-Temperatur-Sollwerte an die Feuerungs-Regler weitergegeben und/oder die Wärmezufuhr unmittelbar eingestellt werden.

Angezeigt ist es auch, in das Tunnelofenmodell ein Modell des Umsetzungsgrades von spezifischen Schadstoffen, wie z. B. Benzol, in Abhängigkeit von relevanten Parametern, wie der Temperatur oder dem Sauerstoffgehalt, unter Berücksichtigung der katalytischen Wirkung des keramischen Materials der Formlinge einzubinden und die Zustandswerte im Tunnelofen nach erforderlichen Umsetzungsgraden einzustellen.

Zusätzlich kann in das Tunnelofenmodell ein Rohstoffmodell eingebunden werden, das an Hand von keramischen und Mineral-Parametern eine temperaturintervallbezogene Aussage über den zulässigen Gradienten im Produkt bis zur Rißbildung und/oder eine Bestimmung des Zeit- Temperaturintegrals für den Sintervorgang und/oder eine Bestimmung der exothermen Wärmemengen gestattet, und diese Vorgabewerte können zur Steuerung des Tunnelofens herangezogen werden.

Die Bestimmung des Abgasstromes kann innerhalb des Tunnelofens in der Weise erfolgen, daß eine Messung des Brennstoffmengenstromes sowie des Sauerstoffgehaltes in Strömungsrichtung vor dem ersten Brenner des Tunnelofens in Verbindung mit einer Verbrennungsrechnung vorgenommen wird.

Ferner können eine oder mehrere der aus dem Modell bestimmbaren Besatztemperaturen und/oder Gradienten je Ofenwagen über den gesamten oder teilweisen Brennverlauf aufgezeichnet und zur Optimierungs- oder Qualitätssteuerung ausgewertet und/oder zum Qualitätsnachweis archiviert werden.

Wird bei einem Tunnelofen das erfindungsgemäße Verfahren angewandt, so ist ein optimaler Betrieb gewährleistet. Durch das vorgesehene mathematische Verfahren wird nämlich die Anpassung der Grundstruktur an den tatsächlichen Tunnelofen in einem zweistufigen Prozeß realisiert, und zwar einmalig (off line) anhand von Meßwagenkurven und den zugehörigen Zustandswerten des Tunnelofens, somit durch einen Aggregatabgleich, und laufend durch ständigen Vergleich zugänglicher Meßwerte am Tunnelofen mit den Schätzwerten des Modells, somit durch einen Betriebszustandsabgleich. Damit sind erstmals die praktischen Voraussetzungen geschaffen, um ein Modell on line zur Steuerung und Regelung von Tunnelöfen einzusetzen.

Nachdem die automatische Adaption gelungen ist, stehen dem Prozeß-Leitsystem zunächst alle Zustandswerte des Tunnelofens zur Verfügung; angefangen von einer vollständigen Energie- und Massenbilanz über die Konzentrations- und Strömungsverteilung der Ofenatmosphäre bis zur Temperaturverteilung jedes einzelnen Besatzpaketes im Tunnelofen.

Entscheidend aber ist bei dem erfindungsgemäßen Verfahren, daß nunmehr das Modell zwar auch in Richtung Ofenraum-Besatz zum Erhalt der Zustandswerte herangezogen, daß parallel dazu aber auch der umgekehrte Weg angewandt wird, also vom Besatz zum Ofenraum. Es werden somit ausgehend von den erforderlichen Besatztemperaturen und Gaskonzentrationen, die dazu notwendigen Ofenraumtemperaturen und Luft- und/oder Energieströme bestimmt. Diese dienen dann als Vorgabe von Sollwerten für die Temperatur- oder Mengenregler und/oder zur direkten Berechnung der erforderlichen Energie- oder Massenströme.

Die erfindungsgemäße Verwendung von Besatztemperaturen aus dem Modell gestattet ferner eine direkte Bestimmung der erforderlichen Luft- bzw. Rauchgasmassenströme unter Berücksichtigung der exothermen Reaktionen des Besatzes. Der Tunnelofen kann demnach mit geringsmöglichen Abgasverlusten und Abwärmemengen ohne die Gefahr von Aufheiz- und Kühlbruch betrieben werden.

Die Bestimmung der Luftmengen erfolgt in der Weise, daß in einem iterativen Verfahren diejenige Luftmenge ermittelt wird, bei der der zulässige kritische Temperaturgradient eines jeden Ofenwagens beim Durchlaufen des Temperaturprofils an keiner Stelle der Aufheizung oder Kühlung überschritten wird. Dem System wird also nicht mehr ein Temperaturprofil der Ofenraumtemperaturen vorgegeben, sondern temperaturintervallabhängige zulässige Temperaturgradienten (K/h). Die Ofenraumtemperaturen stellen sich frei aufgrund der notwendigen Wärmeübertragung ein.

Dabei kann berücksichtigt werden, daß der Luftmengenstrom nur innerhalb vorgegebener Grenzwerte variiert werden darf. In einem iterativen Verfahren wird vorausschauend ermittelt, ob bei dem zunächst vorgegebenen Volumensstrom für einen der Ofenwagen beim Durchlaufen der Aufheiz- oder Kühlzone ein nicht mehr realisierbarer Wert des Volumenstromes auftreten würde.

Ist dies der Fall, dann muß der momentane Volumenstrom entsprechend so korrigiert werden, daß dieser zukünftige Zustand vermieden wird. In diese Ermittlungen können auch Ofenwagen einbezogen werden, über die bereits Besatzinformationen vorliegen, die aber noch nicht in den Ofen eingefahren sind.

Als Randbedingungen der Ofenfahrweise können bestimmte Optimierungskriterien vorgegeben werden, nach denen das System die Zustandwerte ausrichtet. So kann der Tunnelofen emissionsoptimal, z. B. geringste Fluoraustreibung durch gezielt schnelles Durchfahren des Fluoraustreibungsintervalls, energieoptimal, d. h. geringste Abgasmenge bei vorgegebener Ofenleistung und Einhaltung der zulässigen Gradienten, oder leistungsoptimal, nämlich größte Leistung bei Einhaltung der zulässigen Gradienten, betrieben werden.

Weiterhin erlaubt das erfindunsgemäße Verfahren eine Vorgabe der Betriebsweise in der Art, daß der Tunnelofen suboptimal betrieben wird, um ein gemeinsames Optimum von Tunnelofen und Trockner im Wärmeverbund zu realisieren. Es könnte also beispielsweise mehr Kühlluft aus dem Tunnelofen abgezogen werden als es für den Tunnelofen selbst erforderlich wäre, um eine Wärmebedarfsspitze des Trockners abzudecken. Des weiteren könnte unter Einhaltung der Gradientenbedingungen zeitweise weniger Warmluft als notwendig abgezogen werden, um den Tunnelofen als Wärmespeicher zu benutzen.

Neben einer fortlaufenden Überwachung des Tunnelofens auf Überschreitung der kritischen Temperaturgradienten erlaubt das drei-dimensionale Modell die Bestimmung des Zeit-Temperatur-Integrals im Besatz, das die eigentlich relevante Größe des Sinterprozesses beim keramischen Brand darstellt. Die notwendigen Haltetemperaturen an der kritischsten Besatzposition können daher bei der vorgegebenen Schubzeit oder es kann die notwendige Haltezeit bei vorgegebener oder minimaler Temperatur aus dem Modell berechnet und die sich daraus ergebenen Temperatur-Sollwerte an die Feuerungsregler weitergegeben werden.

In die Bestimmung gehen auch exotherme Reaktionen bei Einsatz von Porosierungsmitteln ein. Dies läßt eine Aussage über den Ort der Entstehung von Schwelgasen zu. Dadurch können über das Modell ortsbezogen die erforderlichen Gastemperaturen und/oder Sauerstoffkonzentrationen zur Verbrennung der Schadstoffe ermittelt und über geeignete Stellglieder eingestellt werden. In diese Bestimmung wird ein Modell des Umsetzungsgrades von spezifischen Schadstoffen, wie z. B. Benzol, in Abhängigkeit von der Temperatur und dem Sauerstoffgehalt unter Berücksichtigung der katalytischen Wirkung des Rohstoffes eingebunden. Der Umsetzungsgrad kann dann ohne zusätzliche Analysengeräte bestimmt und nach vorgegebenen Werten eingestellt werden.

Ferner ist gemäß der Erfindung vorgesehen, mit einem Rohstoffmodell zu arbeiten, mittels dem an Hand einiger keramischer und Mineral-Parameter eine temperaturintervallbezogene Aussage über den zulässigen Gradienten (K/m) im Produkt bis zur Rißbildung möglich ist und das auch Aussagen über das Sinterintervall und emissionsspezifische Daten liefert.

Verbindet man nun diese Aussage mit der drei-dimensionalen Temperaturverteilung im Besatz, so kann bei vorgegebener Besatzgeometrie erstmalig lückenlos für beliebige Produktgeometrien vom Rohmaterial auf die Betriebsbrennkurve am Produkt und von dort über das Ofenmodell auf die Ofenraumzustandswerte geschlossen werden. Wird dieses Rohstoffmodell in das Ofenmodell eingebunden, so vergleicht das kombinierte Rohstoff- Ofenmodell an jedem Punkt des Besatzes und für jede Wagenposition den größten auftretenden Gradienten mit dem entsprechenden Materialgrenzwert für die betreffende Temperatur und bestimmt bzw. modifiziert daraus die erforderlichen Gastemperaturen und Volumensströme. Es kann somit eine Brennkurve gestaltet werden, bei der das Produkt rißfrei und ohne Restanteile organischer Zuschlagstoffe oder Schwachbrand den Tunnelofen verläßt.

Das erfindungsgemäße Verfahren ermöglicht somit ein Prozeßleitsystem, dem keine Brennkurve mehr vorgegeben wird, sondern nur noch das Rohstoffmodell und die Besatzgeometrie als Kennzahl aus Ähnlichkeitsbetrachtungen. Für die gewünschte Schubzeit werden unter den vorgegebenen Randbedingungen minimaler Abgas-, Ausfahr- und Wandverluste die erforderlichen Ofenraumzustandswerte bestimmt.

Die notwendige meßtechnische Ausrüstung eines Tunnelofens, bei dem das erfindungsgemäße Verfahren angewandt wird, unterscheidet sich nicht wesentlich von der eines herkömmlichen Tunnelofens. Lediglich die Erfassung der relevanten Volumenströme ist zusätzlich zu bewerkstelligen. Für extern zu- und abgeführte Mengen können handelsübliche Meßgeräte verwendet werden, die zusätzliche Erfassung des Abgasstromes innerhalb des Ofenkanals kann in der Weise vorgenommen werden, daß eine Messung der Brennstoffmenge sowie eine Bestimmung des 0₂ - Gehaltes stromabwärts vor dem ersten Brenner erfolgt. Aus der Verbrennungsrechnung kann ohne Schwierigkeiten der Volumenstrom sodann bestimmt werden.

## Patentansprüche

1. Verfahren zur Steuerung eines Tunnelofens, vorzugsweise zum Brennen keramischer Formlinge, der durch ein digitales Prozeßleitsystem steuerbar ist,
**dadurch gekennzeichnet,**
daß dem Prozeßleitsystem ein mathematisches Modell des Tunnelofens zugeordnet ist, das durch einen Vergleich der Modell-Schätzwerte mit meßbaren Zustandswerten des Tunnelofens kontinuierlich an den momentanen Zustand des Tunnelofens angepaßt werden kann, und daß ausgehend von zeit-, ofenpositions- und/oder produktabhängigen Zustands-Sollwerten des Tunnelofenbesatzes über das adaptierte Ofenmodell die zur Erreichung dieser Sollwerte erforderlichen Zustandswerte im Tunnelofen geschätzt und diese Zustandswerte durch Vorgabe von Führungswerten an Regler zur Einstellung der Zustandswerte und/oder durch direkte Vorgabe von Energie- und/oder Massen- bzw. Volumensströmen realisiert werden.

2. Verfahren nach Anspruch 1,
**dadurch gekennzeichnet,**
daß die Einstellung der Luft- und/oder Rauchgas-Volumensströme unter Berücksichtigung der exothermen Reaktionen des Tunnelofenbesatzes durch Ermittlung aus dem Tunnelofenmodell in der Weise vorgenommen wird, daß derjenige minimale Volumenstrom ermittelt wird, bei dem ein für jedes Temperaturintervall vorgebenener Temperaturgradient im Besatz an keiner Stelle der Aufheizung oder Kühlung überschritten wird.

3. Verfahren nach Anspruch 1 oder 2, **dadurch gekennzeichnet,**
daß in einem oder mehreren iterativen Verfahrensschritten ermittelt wird, welcher Zustandswert bei den eingestellten Luft- und/oder Rauchgas-Volumensströmen zu einem zukünftigen Zeitpunkt eintritt, und daß in Abhängigkeit von dem Ergebnis die momentanen Luft- und/oder Rauchgas-Volumensströme derart korrigiert werden, daß zu dem zukünftigen Zeitpunkt ein kritischer Zustandswert und/oder ein unrealisierbarer Volumensstrom vermieden wird.

4. Verfahren nach einem oder mehreren der Ansprüche 1 bis 3,
**dadurch gekennzeichnet,**
daß zur Einstellung der Zustandswerte im Tunnelofen neben produktspezifischen zulässigen Gradienten oder einer minimalen Abgasmenge weitere Randbedingungen, wie zeitweise vermehrte oder verminderte Warmluftabgabe zur energetischen Optimierung des Wärmeverbundes mit dem Trockner und/oder emisionsoptimale Gradienten und Haltezeiten, z.B. zur zeitoptimalen Durchfahrung des Fluoraustreibungstemperaturintervalls, und/oder temperaturoptimierte Haltezeiten zur Oxydation von organischen oder anorganischen Rohstoffkomponenten in das Ofenmodell integriert werden.

5. Verfahren nach einem oder mehreren der Ansprüche 1 bis 4,
**dadurch gekennzeichnet,**
daß unter Zugrundelegung eines vorgegebenen Zeit-Temperatur-Integrals als Kenngröße des Sinterprozesses des keramischen Materials der Formlinge die Haltetemperaturen bei vorgegebener Schubzeit oder die notwendigen Haltezeiten bei vorgegebener Haltetemperatur bestimmt und die sich daraus ergebenden Ofenraum-Temperatur-Sollwerte an die Feuerungs-Regler weitergegeben und/oder die Wärmezufuhr unmittelbar eingestellt werden.

6. Verfahren nach einem oder mehreren der Ansprüche 1 bis 5,
**dadurch gekennzeichnet,**
daß in das Tunnelofenmodell ein Modell des Umsetzungsgrades von spezifischen Schadstoffen, wie z. B. Benzol, in Abhängigkeit von relevanten Parametern, wie der Temperatur oder dem Sauerstoffgehalt, unter Berücksichtigung der katalytischen Wirkung des keramischen Materials der Formlinge eingebunden und die Zustandswerte im Tunnelofen nach erforderlichen Umsetzungsgraden eingestellt werden.

7. Verfahren nach einem oder mehreren der Ansprüche 1 bis 6,
**dadurch gekennzeichnet,**
daß in das Tunnelofenmodell ein Rohstoffmodell eingebunden ist, das an Hand von keramischen und Mineral-Parametern eine temperaturintervallbezogene Aussage über den zulässigen Gradienten im Produkt bis zur Rißbildung und/oder eine Bestimmung des Zeit-Temperaturintegrals für den Sintervorgang und/oder eine Bestimmung der exothermen Wärmemengen gestattet, und daß diese Vorgabewerte zur Steuerung des Tunnelofens herangezogen werden.

8. Verfahren nach einem oder mehreren der Ansprüche 1 bis 7,
**dadurch gekennzeichnet,**
daß die Bestimmung des Abgasstromes innerhalb des Tunnelofens durch eine Messung des Brennstoffmengenstromes sowie des Sauerstoffgehaltes in Strömungsrichtung vor dem ersten Brenner des Tunnelofens in Verbindung mit einer Verbrennungsrechnung erfolgt.

9. Verfahren nach einem oder mehreren der Ansprüche 1 bis 8,
**dadurch gekennzeichnet,**
daß eine oder mehrere der aus dem Modell bestimmbaren Besatztemperaturen und/oder Gradienten je Ofenwagen über den gesamten oder teilweisen Brennverlauf aufgezeichnet und zur Optimierungs- oder Qualitätssteuerung ausgewertet und/oder zum Qualitätsnachweis archiviert werden.
